# EUROPÄISCHE PATENTSCHRIFT

(11) **EP 2 090 422 B1**
(45) Veröffentlichungstag und Bekanntmachung des Hinweises auf die Patenterteilung: **08.06.2011**
(21) Anmeldenummer: 09150907.5
(22) Anmeldetag: 20.01.2009
(51) Int. Cl.: B29D 30/00, B29C 33/10

(54) **Reifenvulkanisierform**
Tyre vulcanising mould
Moule de vulcanisation de bandages de pneu

(30) Priorität: 14.02.2008 DE 102008009123
(43) Veröffentlichungstag der Anmeldung: 19.08.2009
(73) Patentinhaber: Continental Reifen Deutschland GmbH, 30165 Hannover (DE)
(72) Erfinder: Hassellöf, Magnus, 30161 Hannover (DE); O'Shaugnessy, Bernhard, 31535 Neustadt/Rbge (DE)
(74) Vertreter: Finger, Karsten

(56) Entgegenhaltungen:
- EP-A- 1 232 843
- JP-A- 1 004 310
- JP-A- 9 039 047
- JP-A- 2005 028 590
- JP-A- 2006 312 272
- US-B1- 6 514 447
- US-B1- 6 660 216

## Beschreibung

Die Erfindung betrifft eine Vulkanisierform für Reifen mit mehreren, zu einer umfangsmäßig geschlossenen Form zusammenfügbaren Formsegmenten, wobei die Formsegmente radial verfahrbar sind und radial innen Formflächen mit einem Negativ-Laufstreifenprofil zur Formung des Positiv-Laufstreifenprofils des zu vulkanisierenden Reifens aufweisen und wobei die Formfläche eines jeden Formsegmentes jeweils zwei an die Formfläche angrenzende Stirnflächen aufweist, welche radial ausgerichtet sind und welche die Kontaktflächen der benachbart angeordneten Formsegmente bei zusammengefahrenen Formsegmenten bilden, wobei zusätzlich zum Negativ-Laufstreifenprofil eine Vielzahl an Nuten in der Formfläche dieser Formsegmente angeordnet sind, welche zur Leitung von während der Vulkanisation in der Form eingeschlossenen Luft dienen und wobei zumindest wenige der Nuten an der Kante zur Stirnfläche enden und wobei die Nuten untereinander eine Vielzahl an Kreuzungspunkten ausbilden.

Eine derartige Vulkanisierform ist Beispielsweise aus der DE 602 14785 T2 (siehe auch EP-A-1 232 843) bekannt.

In Reifenvulkanisierformen wird der auf den Reifenunterbau aufgebrachte Laufstreifen aus Kautschukmaterial zu einem gewünschten Positiv-Laufstreifenprofil geformt und unter Wärme- und Druckeinwirkung zu Gummi vulkanisiert. Bei diesem Vorgang muss bisher die zwischen Laufstreifen des Reifenrohlings und der Formfläche des Formsegmentes vorhandene Luft abgeführt werden, um eine einwandfreie Ausformung des Reifenprofils zu gewährleisten.

Bekannte Reifenvulkanisierformen weisen hierfür einerseits in ihrer Formfläche mündende Entlüftungskanäle oder -bohrungen auf, welche andererseits direkt oder über weitere Entlüftungskanäle an einer Außenfläche der Form münden und mit der Atmosphäre in Verbindung stehen. Die Form besteht dabei üblicherweise aus mehreren umfangsmäßig zusammenfügbaren Formsegmenten mit je einer radial innen gelegenen Formfläche, die bei zusammengesetzten Formsegmenten zusammen mit seitlichen Formwänden die Gesamtform bilden, aus der sich die äußere Kontur des Luftreifens ergibt.
Formsegment meint in dieser Anmeldung diejenigen Segmente der Vulkanisierform, welche zur Formung des Laufstreifenprofils des Reifenrohlings dienen.

Bei bekannten Formsegmentsystemen werden die in der Formfläche der Formsegmente mündenden Entlüftungskanäle durch gebohrte Ausnehmungen gebildet, in welche verschließbare Entlüftungskanäle einsetzbar sind. Um eine ausreichende Entlüftung der Vulkanisierform, insbesondere auch in Nischen des Profils zu gewährleisten, muss bisher eine Vielzahl solcher Entlüftungskanäle, üblicherweise zwei- bis dreitausend pro Vulkanisierform, vorgesehen werden. Dies führt zu einem erheblichen Kosten- und Zeitaufwand für die Herstellung der Reifenvulkanisierform.

Ein weiterer Nachteil bekannter Profilsegmentsysteme besteht darin, dass beim Ausvulkanisieren des Fahrzeugluftreifens Kautschukmaterial in die Entlüftungskanäle gepresst bzw. gesogen werden kann. Die dadurch entstehenden Austriebe bleiben auf dem fertigen Fahrzeugluftreifen erhalten und müssen vor dessen Verwendung mit eigens dafür vorgesehenen Maschinen entfernt werden. Dieses sogenannte "Trimmen" führt zu einer Verlängerung und Verteuerung des Herstellungsprozesses des Fahrzeugreifens.

Aus der JP 2006 312272 A, aus der JP 2005 028590 A und aus der JP 01 004310 A sind Vulkanisierformen für Reifen bekannt geworden, bei denen keine Entlüftungsventile, sondern Entlüftungsnuten oder -schlitze in den Formflächen angeordnet sind, welche über durch die Vulkanisierform verlaufende Entlüftungskanäle mit der Atmosphäre in Verbindung stehen.

Aus der den nächstliegenden Stand der Technik bildenden DE 602 14 785 T2 ist eine Vulkanisierform bekannt geworden, bei welcher auf Ventilanordnungen zur Luftabführung verzichtet ist. Die Vulkanisierform weist zwei voneinander getrennte, mit der Atmosphäre in Verbindung stehende Entlüftungsmittel auf. Das erste Entlüftungsmittel bildet geeignete Spalte, welche an den Stirnseiten der nebeneinander, während des Vulkanisiervorganges auf Stoß angeordneten Formsegmente ausgebildet sind und welche mit der Atmosphäre in Verbindung stehen. Die Formflächen können dabei Nuten aufweisen, welche als Luftleitwege zu diesem, an der Stirnseite angeordneten Entlüftungsspaltes dienen. Das zweite Entlüftungsmittel, welches ebenfalls mit der Atmosphäre in Verbindung steht, besteht aus feinen Öffnungen, die in der Formfläche des Formsegmentes, vorzugsweise in den Stegen, angeordnet sind. Das erste Entlüftungsmittel soll dabei für die wirksame Entlüftung des Formhohlraumes dienen, während das zweite Entlüftungsmittel dem sauberen Formbild des Laufstreifenprofils dienen soll.

Nachteilig ist jedoch, dass, auch wenn auf Ventilanordnungen verzichtet werden kann, dennoch zwei Entlüftungsmittel in der Vulkanisierform vorzusehen sind, welche über in der Form angeordnete Kanäle mit der Atmosphäre in Verbindung stehen müssen. Das Vorsehen von zwei Entlüftungsmittel in einer Vulkanisierform ist noch immer zeit- und kostenaufwendig.

Es ist daher die Aufgabe der Erfindung, eine Vulkanisierform für Reifen zu schaffen, bei der auf Entlüftungsmittel, die mit der Atmosphäre über Kanäle in Verbindung stehen, verzichtet werden kann. Die Vulkanisierform soll kostengünstig und einfach herzustellen sein.

Die Aufgabe wird gelöst, indem auf gesonderte, mit der Atmosphäre in Verbindung stehende Entlüftungsmittel zur Luftabführung verzichtet ist.

Erfindungswesentlich und für den Fachmann völlig überraschend ist, dass auf Entlüftungsmittel in der Formfläche der Formsegmente der Vulkanisierform, die über in der Form angeordnete Kanäle mit der Atmosphäre in Verbindung stehen, vollständig verzichtet werden kann. Somit muss eine Formfläche eines Formsegmentes nur mit einander kreuzenden Nuten versehen werden, von denen zumindest einige an den Formsegmentkanten, welche an der Berührungslinie von Formfläche und Stirnfläche entstehen, enden. Somit ist die Herstellung einer erfindungsgemäßen Vulkanisierform sehr kostengünstig und einfach.
Es wird vermutet, dass die beim Zusammenfahren der Formsegmente zwischen Reifenrohling und Formfläche des Formsegmentes verbleibende Luft in den Nutenstrukturen gleichmäßig verteilt und derart komprimiert wird, dass das Laufstreifenprofil des zu formenden Reifens nicht nachteilig beeinflusst wird, sondern sauber geprägt werden kann.

Der mit einer erfindungsgemäßen Vulkanisierform heizgepresste Reifen weist auf seiner mantelförmigen Laufstreifenoberfläche Erhebungen auf, welche in etwa der Nutenstruktur auf der Formfläche entsprechen. Die Laufstreifenelemente des Reifenprofils sind exakt und sauber abformbar.

Als besonders vorteilhaft hat sich eine Tiefe der Nuten von 0,10mm - 0,30mm, vorzugsweise 0,25mm, und eine Breite der Nuten von 0,10mm - 0,30mm, vorzugsweise von 0,25mm, erwiesen. Hierdurch ist eine sehr sauber geformte Reifenoberfläche erhaltbar.

In bestimmten vorteilhaften Ausführungsformen bilden die Nuten ein Wabenmuster oder ein Rautenmuster oder ein Rechteckmuster aus.

In einer bestimmten Ausführungsform sind nur die die mantelförmige Laufstreifenprofilfläche formenden Bereiche der Formfläche der Formsegmente mit Nuten versehen, während die die Vertiefungen, wie vorzugsweise Nuten, einprägenden Erhebungen nicht mit den Nuten versehen sind. Hierdurch ist die Formenherstellung nochmals vereinfacht, weil die klein dimensionierten Erhebungen nicht mit Nuten versehen werden müssen.

Weitere Merkmale, Vorteile und Einzelheiten der Erfindung werden anhand der Zeichnungen, die schematische Ausführungsbeispiele darstellen, näher erläutert. Es zeigen die
- Fig.1: eine segmentierte Vulkanisierform mit Formsegmenten;
- Fig.2: einen Ausschnitt einer Aufsicht auf die Formfläche eines Formsegmentes;
- Fig.3: eine Aufsicht auf Laufstreifenprofilausschnitt eines mit einer erfindungsgemäßen Vulkanisierform heizgepressten Reifens.

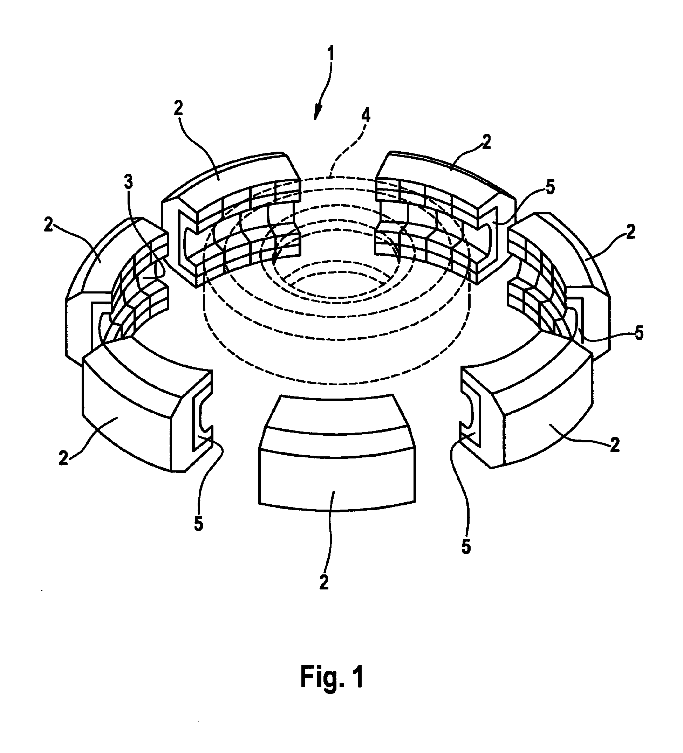

In der **Fig.1** ist eine vereinfachte schematische Darstellung einer segmentierten Vulkanisierform 1 mit mehreren, zu einer umfangsmäßig geschlossenen Form zusammenfügbaren Formsegmenten 2, wobei die Formsegmente 2 radial verfahrbar sind und radial innen Formflächen 3 mit einem Negativ-Laufstreifenprofil zur Formung des Positiv-Laufstreifenprofils des zu vulkanisierenden Reifens 4 aufweisen und wobei die Formsegmente 2 jeweils zwei Stirnflächen 5 aufweisen, welche radial ausgerichtet sind und welche die Kontaktflächen der benachbart angeordneten Formsegmente 2 bei zusammengefahrenen Formsegmenten 2 bilden. Die Formsegmente bestehen in üblicher Art und Weise aus Stahl oder Aluminium.

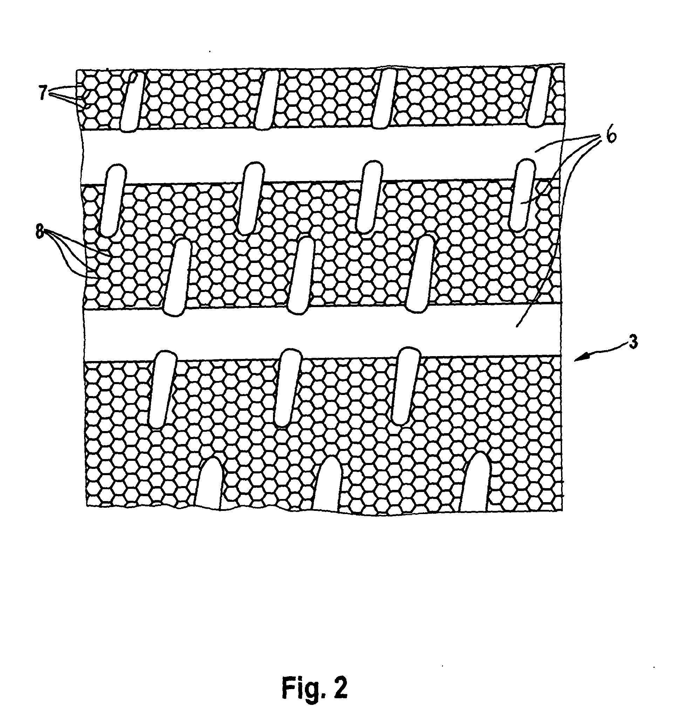

In der **Fig.2** ist eine Aufsicht auf einen Ausschnitt der Formfläche 3 des Formsegmentes 2 der Fig. 1 dargestellt. Die Formfläche 3 weist Erhebungen 4 auf die die Vertiefungen des Laufstreifenprofils des in dieser Form vulkanisierten Reifens einprägen. Zusätzlich zum Negativ-Laufstreifenprofil sind eine Vielzahl an Nuten 7 in der Formfläche dieser Formsegmente angeordnet. Die Nuten 7 weisen eine Tiefe von 0,25mm und eine Breite von 0,25mm auf und dienen zur Leitung und als Kompressionsraum der von während der Vulkanisation in der Form eingeschlossenen Luft. Die Nuten 7 bilden ein wabenförmiges Netz innerhalb der mantelförmigen Formfläche 3, wobei die Erhebungen 6 keine Nuten 7 aufweisen und innerhalb des Netzes, welches die mantelförmige Formfläche 3 vollständig belegt, ausgespart sind. Zumindest wenige der Nuten 7 enden an der Kante zur Stirnfläche 5 und die Nuten 7 bilden untereinander eine Vielzahl an Kreuzungspunkten 8 aus, so dass gesonderte, mit der Atmosphäre über Kanäle in Verbindung stehende Entlüftungsmittel, welche durch die Vulkanisierform zur Luftabführung führen, verzichtbar sind.

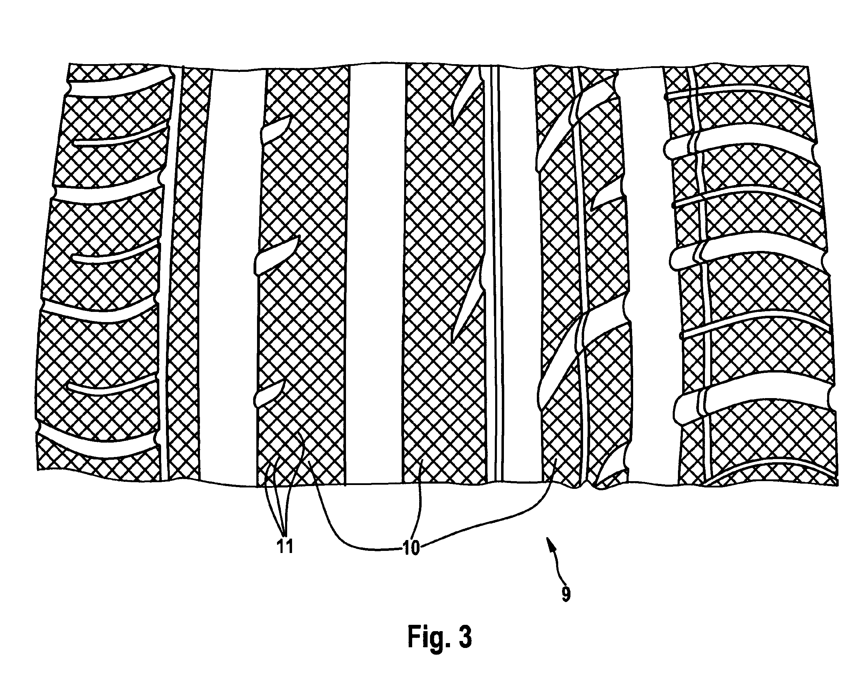

**Fig.3** zeigt eine Aufsicht auf Laufstreifenprofilausschnitt 9 eines mit einer erfindungsgemäßen Vulkanisierform 1 heizgepressten Reifens. Das Laufstreifenprofil 9 weist auf seiner mantelförmigen Oberfläche, hier: auf den Profilbändern 10 ein Netz von stegartigen Erhöhungen 11 in Form eines Rautenmusters auf. Die stegartigen Erhöhungen 11 sind durch entsprechende Nuten der dieses Laufstreifenprofil geformten Formfläche der Vulkanisierform entstanden, welche in der Formfläche der Vulkanisierform der Leitung von Luft und der Zurverfügungstellung von Luftkompressionsvolumina dienen. Die Profilelemente sind sauber ohne Lufteinschlüsse geformt, obwohl in der diesen Reifen heizgepressten Vulkanisierform auf mit der Atmosphäre in Verbindung stehende Entlüftungsmittel verzichtet ist.

### Bezugszeichenliste

### (Teil der Beschreibung)

- 1: Vulkanisierform
- 2: Formsegment
- 3: Formfläche
- 4: Zu vulkanisierender Reifen
- 5: Stirnfläche
- 6: Erhebung
- 7: Nut
- 8: Kreuzungspunkt
- 9: Laufstreifenprofil
- 10: Profilband
- 11: Stegartige Erhöhung

## Patentansprüche

1. Vulkanisierform (1) für Reifen mit mehreren, zu einer umfangsmäßig geschlossenen Form zusammenfügbaren Formsegmenten (2), wobei die Formsegmente (2) radial verfahrbar sind und radial innen Formflächen (3) mit einem Negativ-Laufstreifenprofil (6) zur Formung des Positiv-Laufstreifenprofils (9) des zu vulkanisierenden Reifens aufweisen und wobei die Formsegmente (2) jeweils zwei Stirnflächen (5) aufweisen, welche radial ausgerichtet sind und welche die Kontaktflächen der benachbart angeordneten Formsegmente (2) bei zusammengefahrenen Formsegmenten (2) bilden, wobei zusätzlich zum Negativ-Laufstreifenprofil eine Vielzahl an Nuten (7) in der Formfläche (3) dieser Formsegmente (2) angeordnet sind, welche zur Leitung von während der Vulkanisation in der Form eingeschlossenen Luft dienen und wobei zumindest wenige der Nuten (7) an der Kante zur Stirnfläche (5) enden und wobei die Nuten (7) untereinander eine Vielzahl an Kreuzungspunkten (8) ausbilden,
**dadurch gekennzeichnet,**
**dass** auf gesonderte, mit der Atmosphäre in Verbindung stehende Entlüftungsmittel zur Luftabführung verzichtet ist.

2. Vulkanisierform nach Anspruch 1,
**dadurch gekennzeichnet, dass** die Nuten (7) eine Tiefe von 0,1mm - 0,3mm, vorzugsweise 0,25mm aufweisen.

3. Vulkanisierform nach Anspruch 1,
**dadurch gekennzeichnet, dass** die Nuten (7) eine Breite von 0,1mm - 0,3mm, vorzugsweise von 0,25mm aufweisen.

4. Vulkanisierform nach Anspruch 1,
**dadurch gekennzeichnet, dass** die Nuten (7) ein Wabenmuster ausbilden.

5. Vulkanisierform nach Anspruch 1,
**dadurch gekennzeichnet, dass** die Nuten (7) ein Rautenmuster ausbilden.

6. Vulkanisierform nach Anspruch 1,
**dadurch gekennzeichnet, dass** die Nuten (7) Rechteckmuster ausbilden.

7. Vulkanisierform nach Anspruch 1,
**dadurch gekennzeichnet, dass** nur die die mantelförmige Laufstreifenprofilfläche formenden Bereiche der Formflächen (3) der Formsegmente (2) mit Nuten (7) versehen sind, während die die Vertiefungen der Laufstreifenprofilfläche, wie vorzugsweise Rillen, einprägenden Erhebungen (6) nicht mit den Nuten (7) versehen sind.

## Claims

1. Vulcanizing mould (1) for tyres comprising a plurality of mould segments (2) which can be joined together to form a circumferentially closed mould, wherein the mould segments (2) are radially displaceable and have, radially inwardly, forming areas (3) with a negative tread rubber profile (6) for forming the positive tread rubber profile (9) of the tyre to be vulcanized, and wherein the mould segments (2) each have two end faces (5) which are oriented radially and which form the contact faces of the adjacently arranged mould segments (2) when the mould segments (2) are moved together, wherein, in addition to the negative tread rubber profile, a plurality of grooves (7) are arranged in the forming area (3) of these mould segments (2) and serve to guide air which is enclosed in the mould during the vulcanization, and wherein at least a few of the grooves (7) terminate at the edge towards the end face (5), and wherein the grooves (7) form a plurality of crossing points (8) with one another, **characterized in that** separate venting means for removing air which are in communication with the atmosphere are dispensed with.

2. Vulcanizing mould according to Claim 1, **characterized in that** the grooves (7) have a depth of 0.1 mm - 0.3 mm, preferably 0.25 mm.

3. Vulcanizing mould according to Claim 1, **characterized in that** the grooves (7) have a width of 0.1 mm - 0.3 mm, preferably of 0.25 mm.

4. Vulcanizing mould according to Claim 1, **characterized in that** the grooves (7) form a honeycomb pattern.

5. Vulcanizing mould according to Claim 1, **characterized in that** the grooves (7) form a diamond pattern.

6. Vulcanizing mould according to Claim 1, **characterized in that** the grooves (7) form rectangular patterns.

7. Vulcanizing mould according to Claim 1, **characterized in that** only the regions of the forming areas (3) of the mould segments (2) which form the casing-shaped tread rubber profile area are provided with grooves (7), whereas the elevations (6) which impress the depressions of the tread rubber profile area, such as preferably channels, are not provided with the grooves (7).

## Revendications

1. Moule de vulcanisation (1) pour bandages de roue, le moule de vulcanisation présentant plusieurs segments de moule (2) qui peuvent être assemblés en une forme à périphérie fermée,
les segments de moule (2) pouvant être déplacés radialement et présentant radialement vers l'intérieur des surfaces de moule (3) dotées d'un profil négatif (6) de bande de roulement pour former le profil positif (9) de la bande de roulement du bandage de roue à vulcaniser,
les segments de moule (2) présentant tous deux surfaces frontales (5) orientées radialement et qui forment les surfaces de contact entre les segments de moule (2) disposés au voisinage l'un de l'autre lorsque les segments de moule (2) sont rassemblés,
plusieurs rainures (7) qui servent à guider l'air inclus dans le moule pendant la vulcanisation étant disposées en plus du profil négatif de bande de roulement dans la surface du moulage (3) de ces segments de moule (2), au moins certaines des rainures (7) se terminant par leur arête sur la surface frontale (5) et les rainures (7) formant entre elles plusieurs points de croisement (8),
**caractérisé en ce que**
le moule ne présente pas de moyens d'évent distincts, reliés à l'atmosphère, pour évacuer l'air.

2. Moule de vulcanisation selon la revendication 1, **caractérisé en ce que** les rainures (7) ont une profondeur de 0,1 mm à 0,3 mm et de préférence de 0,25 mm.

3. Moule de vulcanisation selon la revendication 1, **caractérisé en ce que** les rainures (7) ont une largeur de 0,1 mm à 0,3 mm et de préférence de 0,25 mm.

4. Moule de vulcanisation selon la revendication 1, **caractérisé en ce que** les rainures (7) forment un motif en nid d'abeilles.

5. Moule de vulcanisation selon la revendication 1, **caractérisé en ce que** les rainures (7) forment un motif en losange.

6. Moule de vulcanisation selon la revendication 1, **caractérisé en ce que** les rainures (7) forment un motif en rectangle.

7. Moule de vulcanisation selon la revendication 1, **caractérisé en ce que** seules les parties des surfaces de moulage (3) des segments de moule (2) qui forment la surface d'enveloppe du profil de la bande de roulement sont dotées de rainures (7), tandis que les saillies (6) qui impriment les creux de la surface du profil de la bande de roulement, par exemple des rigoles, ne sont pas dotées de rainures (7).
